# EUROPEAN PATENT SPECIFICATION

(11) **EP 2 810 110 B1**
(45) Date of publication and mention of the grant of the patent: **10.04.2019**
(21) Application number: 13705603.2
(22) Date of filing: 30.01.2013
(51) Int. Cl.: G02B 6/38

(54) **OPTICAL CONNECTOR**
OPTISCHER VERBINDER
CONNECTEUR OPTIQUE

(30) Priority: 02.02.2012 JP 2012021103
(43) Date of publication of application: 10.12.2014
(73) Proprietor: Yazaki Corporation, Minato-ku Tokyo 108-8333 (JP)
(72) Inventor: HIKOSAKA, Tomohiro, Susono-shi, Shizuoka 410-1194 (JP); IKEYA, Kenichi, Susono-shi, Shizuoka 410-1194 (JP)
(74) Representative: Grünecker Patent- und Rechtsanwälte PartG mbB
(86) International application number: PCT/JP2013/052642
(87) International publication number: WO 2013/115405

(56) References cited:
- WO-A1-2007/050470
- US-A- 4 936 662

## Description

### Technical Field

The present invention relates to an optical connector. The invention is defined in the accompanying claims.

### Background Art

There is an optical connector which is used for interconnecting optical fibers to each other in an vehicle LAN system or the like (for example, see PTL 1). As shown in Fig. 7, an optical connector 501 of this kind includes: a stop ring 507 in which a through hole 503 is formed and an optical fiber 505 is placed in the through hole 503; a crimping ring 511 which is placed in the circumference of an optical fiber cable 509 and which crimps the stop ring 507 and the optical fiber cable 509; a ferule 513 which is disposed at the tip end of an optical fiber in the optical fiber cable 509; a spring (not shown) which is placed between the ferule 513 and the stop ring 507; a plug frame 517 which is fitted to the stop ring 507; a grip 519 which is fitted to the plug frame 517; and a boot 521 which covers the crimping ring 511 and a part of the optical fiber cable 509.

The boot 521, the crimping ring 511, and the stop ring 507 are sequentially passed over the optical fiber cable 509, in a step of assembling the optical connector 501. In the optical fiber cable 509, the ferule 513 is fixed to the optical fiber 505 which is exposed by removing a sheath 523 and a tension member 525. In a step of crimping the crimping ring 511 over the stop ring 507 and the optical fiber cable 509, the stop ring 507 is crimped by applying pressure on the periphery by using a crimping tool or the like while clamping the tension member 525 between the stop ring 507 and the crimping ring 511. Then, the grip 519 is fitted to the plug frame 517, and the boot 521 is placed so as to cover a part of the stop ring 507, the crimping ring 511, and a part of the optical fiber cable 509, thereby completing the optical fiber cable 509 with the optical connector.

### Citation List

### [Patent Literature]

[PTL 1] JP-A-2010-266830

### Summary of Invention

### Technical Problem

In the above-described related-art optical connector 501, however, the boot 521 is fixed by means of press fitting or an adhesive agent to the crimping ring 511 which has been crimped. In the fixation by press fitting therefore, there is a fear that slipping off may be caused by accidental pulling of the boot or loosening due to bending of the cable. In the fixation by an adhesive agent, the man hour for the adhering work, and the cost such as the material cost are increased, and there is a fear similar to that in the fixation by press fitting.

It is an object of the invention to provide an optical connector in which slipping off of a boot caused by accidental pulling of the boot or loosening due to bending of an optical fiber cable can be prevented from occurring, without increasing the man hour for the work, and the material cost.

### Solution to Problem

In order to achieve the object, according to the invention, there is provided an optical connector comprising: a housing which houses a ferrule connected to a tip end portion of an optical fiber of an optical fiber cable; a crimping sleeve housed in the housing and including a tubular portion in which the optical fiber is passed through and which is led out from an opening of the housing; a crimping member which fixes a sheath of the optical fiber cable, the sheath covering an outer circumference of the tubular portion; and a boot including a protecting portion which covers outer circumferences of the optical fiber cable and the crimping member, the boot including a flange portion which is continuous to the protecting portion and which covers the opening of the housing, wherein a neck portion of a T-shaped protrusion, which is protruded from the flange portion toward an interior of the housing, is inserted into a boot engagement notch, which is formed in an outer portion of the crimping sleeve and an open end of which is closed by an inner surface of a sidewall of the housing.

A tip end of the neck portion of the T-shaped protrusion may be a swollen portion, and the swollen portion may be larger than the neck portion in a cross-sectional shape perpendicular to a direction in which the T-shaped protrusion is protruded from the flange potion.

According to an aspect of the invention, in the T-shaped protrusion of the boot, the tip end of the neck portion which is protruded from the flange portion toward the interior of the housing is formed as a swollen portion. In a cross-sectional shape perpendicular to the protrusion direction, namely, the swollen portion is larger than the neck portion. In a T-shaped protrusion which is formed by a soft material such as synthetic rubber, when the neck portion is elastically deformed, usually, the swollen portion is inclined and deflected in the circumferential direction. When the neck portion is inserted from the outer side (in a direction perpendicular to the axis of the neck portion) into the boot engagement notch formed in the outer portion of the crimping sleeve, therefore, the swollen portion of the T-shaped protrusion is butted against a pair of notch forming pieces which form the boot engagement notch, whereby slipping off of the optical fiber cable in the lead-out direction is blocked from occurring. In this case, the neck portion of the T-shaped protrusion can be easily inserted from the open end into the boot engagement notch of the crimping sleeve which is not housed in the housing. By contrast, when the boot engagement notch of the crimping sleeve into which the neck portion of the T-shaped protrusion is inserted is housed in the housing, the open end is closed by the inner surface of the sidewall of the housing, and therefore the T-shaped protrusion cannot slip off from the boot engagement notch.

A pair of the boot engagement notch and a pair of the T-shaped protrusion may be disposed across the tubular portion.

According to an aspect of the invention, the pair of T-shaped protrusions are disposed on both sides of the flange portion of the boot with the optical fiber, which is passed through the flange portion, interposed between the pair of T-shaped protrusions. Therefore, a force in the slipping-off direction which acts on the boot is evenly supported by the both sides of the flange portion with the axis of the optical fiber cable interposed between the both sides, and the flange portion of the boot is stably engaged.

The crimping sleeve may be inserted through the opening of the housing, and the optical connector may further have an engaging mechanism configured to block slipping off of the crimping sleeve from the interior of the housing.

According to an aspect of the invention, from the side of the optical fiber which is exposed by peeling the sheath, the boot, the crimping member, and the crimping sleeve are sequentially passed over the optical fiber cable, and thereafter the ferrule is connected to the optical fiber. After the sheath is fixed to the tubular portion by the crimping member, the crimping member is covered by the protecting portion of the boot. In the boot which covers the crimping member, the T-shaped protrusion(s) which is forward protruded from the flange portion on the side of the interior of the housing is engaged to the crimping sleeve. Finally, the crimping sleeve to which the boot is engaged is attached through the rear opening of the hosing. Namely, both the provisional installation in which the boot is installed to the crimping sleeve, and the final installation in which the crimping sleeve and the housing are installed to each other are performed in the same assembly direction extending along the axis of the optical fiber cable, so that the assembly can be easily conducted.

### Advantageous Effects of Invention

According to an aspect of the invention, slipping off of a boot caused by accidental pulling of the boot or loosening due to bending of an optical fiber cable can be prevented from occurring, without increasing the man hour for the work, and the material cost.

### Brief Description of Drawings

Fig. 1 is an exploded perspective view of an optical connector of an embodiment of the invention.
Fig. 2 is an exploded perspective view of a state before a crimping sleeve to which a boot is attached is installed to a housing shown in Fig. 1.
Fig. 3 is an overall perspective view of the crimping sleeve shown in Fig. 2.
Fig. 4 is a sectional view of the optical connector of the embodiment of the invention, taken along an optical fiber.
Fig. 5 is an overall perspective view of the boot shown in Fig. 2.
Fig. 6 is a perspective view of main portions showing a modification of a crimping member shown in Fig. 1.

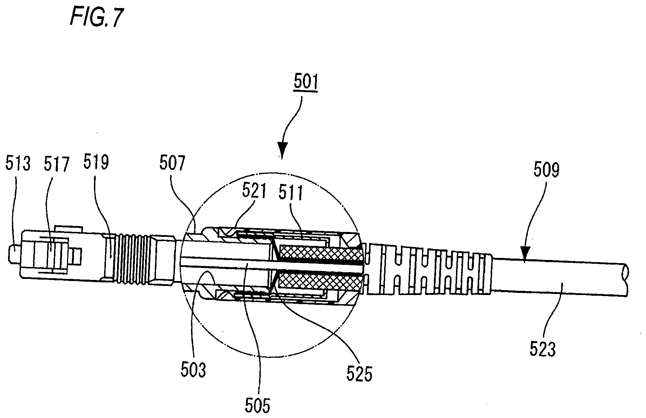

Fig. 7 is a partly cutaway and enlarged plan view of a related-art optical connector.

### Description of Embodiments

Hereinafter, an optical connector of an embodiment of the invention will be described in detail with reference to the accompanying drawings.

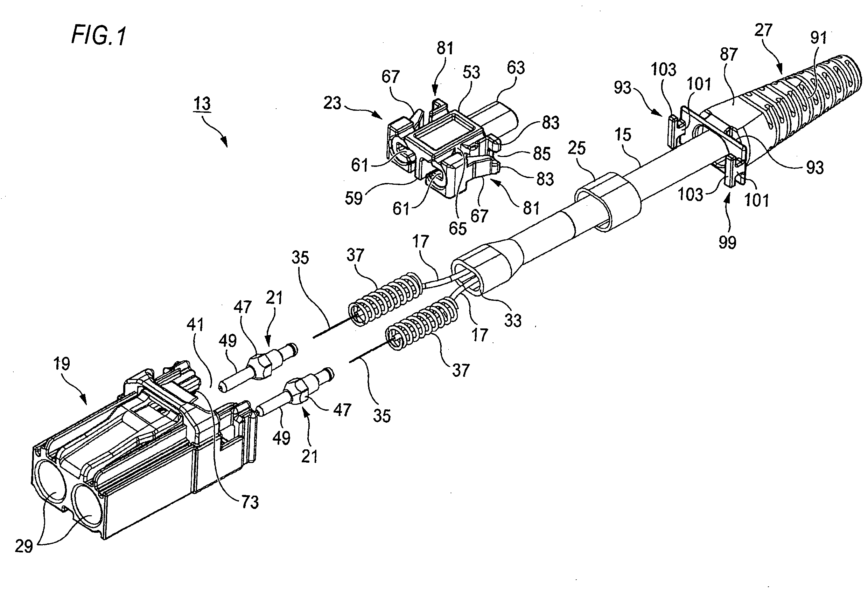

As shown in Fig. 1, in the optical connector 13 of the embodiment, a housing 19, ferrules 21, a crimping sleeve 23, a crimping ring (crimping member) 25, and a boot 27 are formed as component members. When the optical connector is coupled to a counter optical connector (not shown), optical fiber cores 17 which are cores of an optical fiber cable 15 are connected to those of the counter optical connector in a state where their tip ends are butted to each other, whereby optical fibers used in, for example, a vehicle are interconnected.

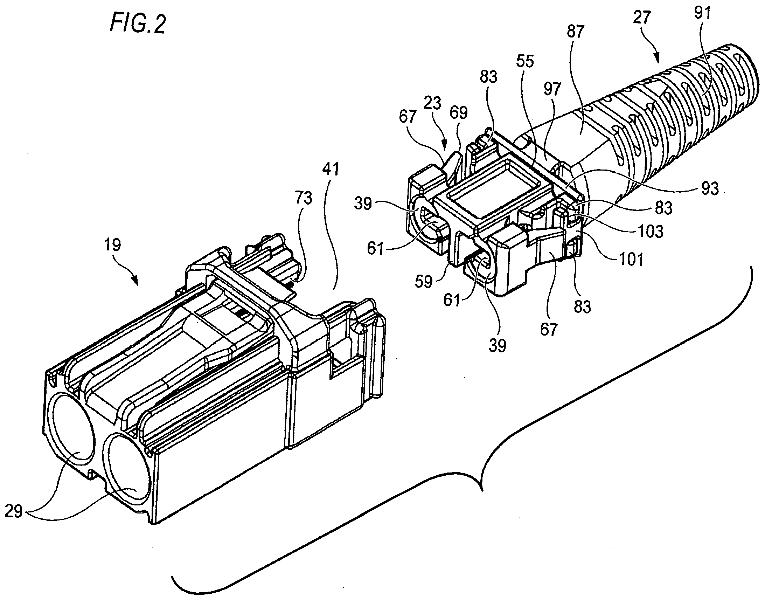

As shown in Fig. 2, the housing 19 which is made of a synthetic resin has a pair of coupling openings 29 with respect to a counter optical connector (not shown), in a front portion. The housing 19 houses the pair of ferrules 21 (see Fig. 1) in rear of the coupling openings 29. The ferrules 21 are connected to tip end portions of the optical fibers of the optical fiber cable 15, respectively. Namely, the optical fiber cores 17 which are exposed by removing a sheath 33 and a tension member (not shown) from the optical fiber cable 15 are inserted and fixed to the ferrules 21, respectively. More specifically, optical fibers 35 (see Fig. 1) of the optical fiber cores 17 are inserted and fixed to the ferrules 21, respectively. The ferrules 21 are housed in the housing so as to be movable in the axial direction of the housing, and forward elastically urged by the front ends of coil springs 37 housed in the housing 19. The rear ends of the coil springs 37 are butted against spring seats 39 which are recessed in the front surface of the crimping sleeve 23. In the specification, the optical connector 13 will be described assuming that the coupling openings 29 are located in the front side, and a rear opening 41 is located in the rear side.

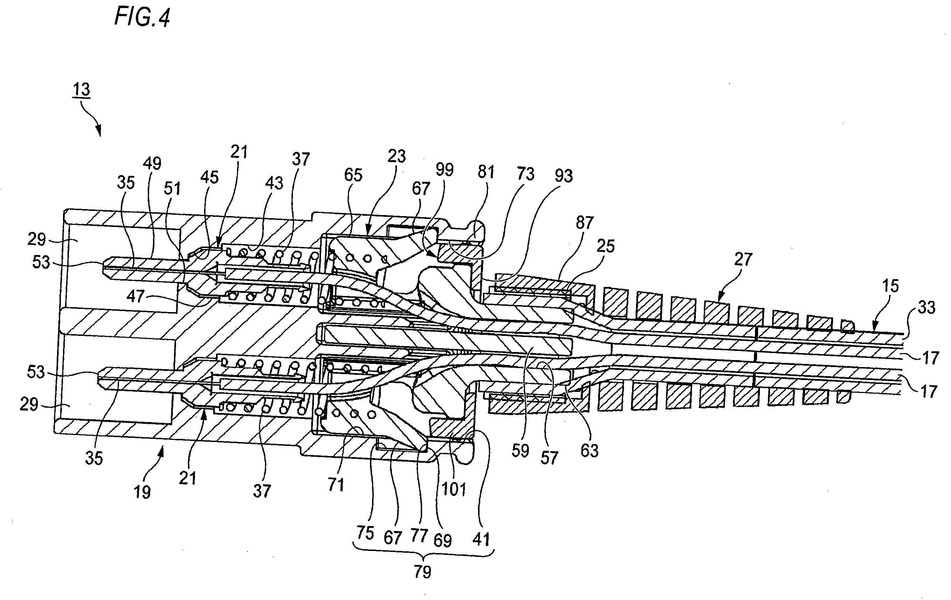

In the ferrules 21 which are forward elastically urged by the coil springs 37, ferrule large-diameter portions 47 are butted against front-wall butting portions 45 of ferrule housing holes 43 (see Fig. 4), whereby further forward movement is prevented from occurring. Ferrule small-diameter portions 49 are disposed (continuously) so as to be continued forward from the ferrule large-diameter portions 47 (see Fig. 4) . The ferrule small-diameter portions 49 are passed through front-wall through holes 51 of the front-wall butting portions 45 to be protruded into the coupling openings 29. Bare optical fibers 35 which are obtained by removing coatings from the optical fiber cores 17 are inserted into the ferrule small-diameter portions 49, and fixed thereto by an adhesive agent or the like, and the tip ends of the optical fibers 35 are placed on the tip end surfaces of the ferrule small-diameter portions 49. The ferrules 21 are butt-connected to counter ferrules of the counter optical connector through joining end surfaces 53 of the ferrule small-diameter portions 49. As a result, the optical fiber cores 17 which are terminated by the ferrules 21 in a connector connectable manner are connected to optical lines of the counter optical connector.

When butted against the counter optical connector, the ferrules 21 can be slightly pushed rearward in the connection direction within the elastic deformation range of the coil springs 37. Therefore, the optical fibers 35 are prevented from being broken by excessive stress concentration. Furthermore, the optical connector is configured so that the urging forces of the coil springs 37 act as a butting force between the ferrules, and a desired connection loss is stably obtained.

As shown in Fig. 2, the rear opening 41 is formed in rear of the housing 19. A tubular portion 63 of the crimping sleeve 23 through which the optical fibers 35 connected to the ferrules 21 are internally passed is led out from the rear opening 41 (see Fig. 4). The crimping sleeve 23 is inserted into the housing 19 through the rear opening 41.

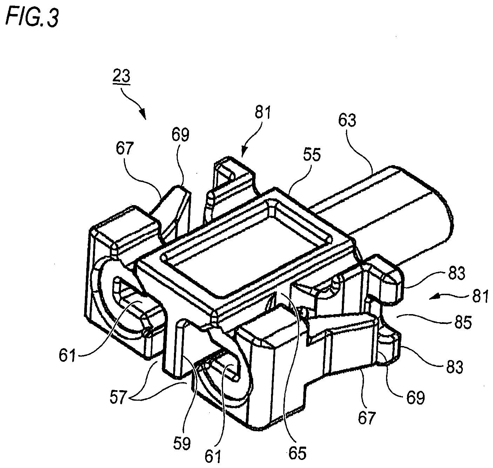

As shown in Fig. 3, the crimping sleeve 23 has a flat and substantially rectangular parallelepiped sleeve body portion 55 which is made of a hard resin material, and through which the optical fiber cores 17 are internally passed. In the sleeve body portion 55, a pass-through space 57 which is anteroposteriorly passed through the body portion is formed, and the pass-through space 57 is partitioned into right and left fiber pass-through paths 61 by a partition wall portion 59 that is formed in the middle. The tubular portion 63 is rearward protruded in the sleeve body portion 55. In the tubular portion 63, the partition wall portion 59 and the fiber pass-through paths 61 extend (see Fig. 4) . The crimping sleeve 23 is housed in the housing 19 in a state where the optical fiber cores 17 are passed through the inner fiber pass-through paths 61, and the tubular portion 63 is led out from the rear opening 41 of the housing 19.

Elastic engaging pieces 67 are disposed on outer portions 65 which are on both sides of the sleeve body portion 55, respectively. In each of the elastic engaging pieces 67, the front end side is connected to the sleeve body portion 55, and the rear end side is formed as a free end which is gradually separated from the body portion. Namely, the elastic engaging pieces are opened in an inverted truncated V-like manner in a plan view (see Fig. 4) . The tip ends of the free ends are formed as engaging claws 69. The elastic engaging pieces 67 are elastically deformable in the direction in which the engaging claws 69 approach and separate from the outer portions 65. As described later, the engaging claws 69 are engaged to the interior of the housing 19.

As shown in Fig. 4, a sleeve housing space 71 is formed in the housing 19, and a rear portion of the sleeve housing space 71 is formed as the rear opening 41 to be opened in the rear end of the housing 19. The sleeve body portion 55 of the crimping sleeve 23 is housed in the sleeve housing space 71. The crimping sleeve 23 in which the sleeve body portion 55 is housed in the sleeve housing space 71 is attached to the housing 19 in the state where the tubular portion 63 is protruded from the rear opening 41. In the sleeve housing space 71, a recessed portion 75 is formed by outward grinding the inner surface 73 of the sidewall with respect to the rear opening 41. An engaging step portion 77 is formed between the recessed portion 75 and the sidewall inner surface 73, and the engaging claws 69 of the elastic engaging pieces 67 are butted and engaged to the engaging step portion 77.

Namely, the crimping sleeve 23 is inserted through the rear opening 41 of the housing 19 while the tubular portion 63 is rearward directed. In the crimping sleeve 23 which is inserted into the rear opening 41, the pair of both elastic engaging pieces 67 are deflected by the sidewall inner surface 73 in the direction in which the pieces approach to each other. When the crimping sleeve 23 in which the elastic engaging pieces 67 are deflected is further inserted into the sleeve housing space 71, the engaging claws 69 of the elastic engaging pieces 67 reach the recessed portion 75. In the pair of engaging claws 69 which reach the recessed portion 75, the elastic engaging pieces 67 are opened by the elastic restoring force. Therefore, the engaging claws are engaged to the engaging step portion 77 to block rearward slipping off of the crimping sleeve 23 from the housing 19.

The optical fiber cores 17 of the optical fiber cable 15 are led out from the tubular portion 63 of the crimping sleeve 23, and the outer circumference of the tubular portion 63 is covered by the sheath 33. The sheath 33 covering the tubular portion 63 is fixed to the tubular portion 63 by crimping the crimping ring 25 having an oval tubular shape, from the outside. As a result, the optical fiber cable 15 and the crimping sleeve 23 are integrally fixed to each other. When the optical fiber cable 15 is rearward pulled, the engaging claws 69 are butted against the engaging step portion 77, thereby restricting slipping off of the crimping sleeve 23. Namely, the rear opening 41, the recessed portion 75, the engaging step portion 77, the elastic engaging pieces 67, and the engaging claws 69 constitute an engaging mechanism 79 in which the crimping sleeve 23 is inserted through the rear opening 41 of the housing 19, and slipping off from the interior of the housing 19 is blocked.

Boot engagement notches 81 shown in Fig. 3 are formed in the rear ends of the outer portions 65 of the crimping sleeve 23, respectively. Each of the boot engagement notches 81 is formed between a pair of notch forming pieces 83 which are perpendicularly outward protruded from the corresponding outer portion 65 in the rear end of the sleeve body portion 55. In the boot engagement notch 81, therefore, the gap between the tip ends of the notch forming pieces 83 functions as an open end 85 to be opened. When the crimping sleeve 23 is inserted into the sleeve housing space 71 of the housing 19, the open end 85 of the boot engagement notch 81 is closed by the sidewall inner surface 73 of the housing 19 (see Fig. 4). Namely, the boot engagement notches 81 which have been opened are caused to be formed into a hole shape in which the open end 85 is closed, by the sidewall inner surface 73. The boot engagement notches 81 function as a part which blocks slipping off of the boot 27.

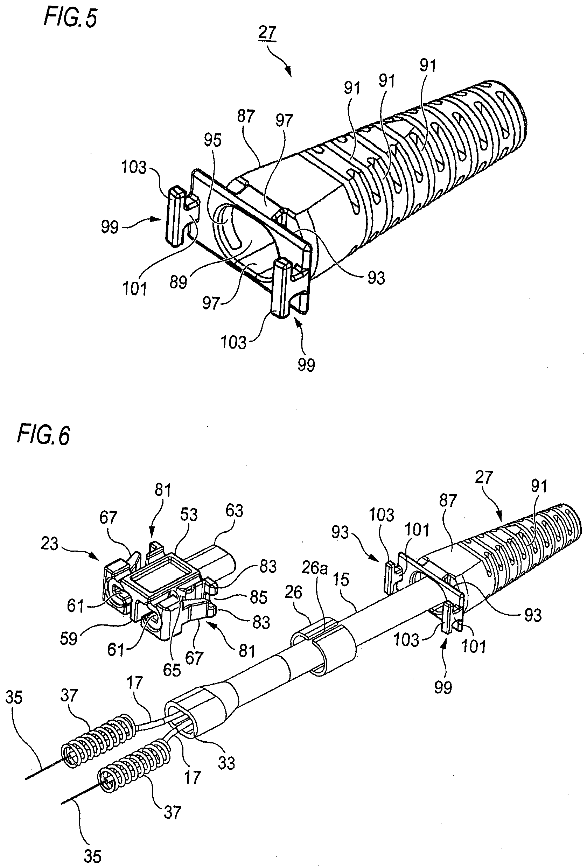

As shown in Fig. 5, the boot 27 has a protecting portion 87 which is made of a soft material such as synthetic rubber, and which covers the outer circumferences of the optical fiber cable 15 and the metal-made crimping ring 25. A tubular-portion housing hole 89 is formed in the basal portion of the protecting portion 87. The tubular-portion housing hole 89 covers the crimping ring 25 which crimps and fixes the sheath 33 of the optical fiber cable 15 over the tubular portion 63, from the side of the outer circumference. A plurality of circumferential grooves 91 which provide adequate flexibility to the protecting portion 87 are formed in the circumference of the protecting portion 87. The boot 27 has a rectangular flange portion 93 which is continuous to the protecting portion 87, and which covers the rear opening 41 of the housing 19. A pair of right and left bent holes 95 which are elongated in the circumferential direction are formed between the protecting portion 87 and the flange portion 93. The flange portion 93 and the protecting portion 87 are connected to each other by a pair of upper and lower coupling portions 97.

The tubular-portion housing hole 89 is opened in the middle of the flange portion 93 which is connected to the protecting portion 87 through the coupling portions 97. T-shaped protrusions 99 are protruded toward the front side (toward the interior of the housing) in the both sides of the flange portion 93 across the tubular-portion housing hole 89, respectively. A pair of right and left boot engagement notches 81 which have been described above are disposed across the tubular portion 63, and similarly a pair of right and left T-shaped protrusions 99 are disposed across the tubular portion. In each of the T-shaped protrusions 99, the tip end of the neck portion 101 which is perpendicularly protruded from the flange portion 93 is formed as a swollen portion 103. In the embodiment, the swollen portion 103 is formed into a columnar shape which extends in a direction perpendicular to the neck portion 101. Alternatively, for example, the swollen portion 103 may be formed into a triangular shape in which the base side is connected to the neck portion 101, or a semicircular plate-like shape in which the diameter side is connected to the neck portion 101.

The T-shaped protrusions 99 are molded integrally with the flange portions 93, and have flexibility. Because of the' flexibility, the T-shaped protrusions 99 are openable so that the swollen portions 103 are outward displaced. In each of the T-shaped protrusions 99, therefore, the neck portion 101 can be inserted through the open end 85 (see Fig. 3) of the corresponding boot engagement notch 81. In the T-shaped protrusion 99 in which the neck portion 101 is inserted into the boot engagement notch 81, the swollen portion 103 is butted against the notch forming piece 83, and rearward slipping off of the T-shaped protrusion 99 is blocked. In a state where the crimping sleeve 23 is not attached to the housing 19, the neck portions 101 of the T-shaped protrusions 99 can be separated from the open ends 85. By contrast, when the crimping sleeve 23 is attached to the housing 19, the open ends 85 are closed by the sidewall inner surface 73, and therefore the neck portions 101 cannot slip off from the open ends 85. As a result, the T-shaped protrusions 99 are surely prevented from slipping off from the open ends 85, and the housing 19, the crimping sleeve 23, and the boot 27 are installed to each other in an integrally fixed manner.

Next, the function of the thus configured optical connector 13 will be described.

In the optical connector 13 of the embodiment, the boot 27 is formed by a soft material such as synthetic rubber so as to include the protecting portion 87, the flange portion 93, and the T-shaped protrusions 99. In each of the T-shaped protrusions 99, the tip end of the neck portion 101 which is protruded from the flange portion 93 toward the interior of the housing 19 is formed as the swollen portion 103. In a cross-sectional shape perpendicular to the protrusion direction, namely, the swollen portion 103 is larger than the neck portion 101. In the T-shaped protrusion 99, when the neck portion 101 is elastically deformed, the swollen portion 103 is inclined and deflected in the circumferential direction. Therefore, the T-shaped protrusion can be easily inserted into the boot engagement notch 81 as described later.

In the boot 27 in the embodiment, when the neck portions 101 of the T-shaped protrusions 99 are inserted while being deflected from the outer side (in a direction perpendicular to the axes of the neck portions 101) into the boot engagement notches 81 formed in the outer portions 65 of the crimping sleeve 23, the swollen portions 103 of the T-shaped protrusions 99 are butted against the pairs of notch forming pieces 83 which are located across the boot engagement notches 81, whereby slipping off of the optical fiber cable 15 in the lead-out direction is blocked from occurring. In this case, the neck portions 101 of the T-shaped protrusions 99 can be easily elastically deformed and inserted from the open ends 85 into the boot engagement notches 81 of the crimping sleeve 23 which is not housed in the housing 19. Namely, the provisional installation of the boot 27 and the crimping sleeve 23 can be easily performed.

By contrast, in the final installation in which the housing 19, the crimping sleeve 23, and the boot 27 are integrated to each other, the crimping sleeve 23 in which the T-shaped protrusions 99 are engaged to the boot engagement notches 81 is inserted through the rear opening 41 of the housing 19. When the crimping sleeve is housed in the housing 19, the open ends 85 of the boot engagement notches 81 into which the neck portions 101 of the T-shaped protrusions 99 are inserted are closed by the sidewall inner surface 73 of the housing 19. Therefore, the T-shaped protrusions 99 are surely blocked from slipping off from the boot engagement notches 81.

In the optical connector 13 of the embodiment, the boot 27, the crimping ring 25, and the crimping sleeve 23 are sequentially passed over the optical fiber cable 15 from the side of the optical fibers 35 which are exposed by peeling the sheath 33 off, and thereafter the ferrules 21 are connected to the optical fibers 35. After the sheath 33 is fixed to the tubular portion 63 by the crimping ring 25, the crimping ring 25 is covered by the protecting portion 87 of the boot 27. In the boot 27 which covers the crimping ring 25, the T-shaped protrusions 99 which are forward protruded from the flange portion 93 on the side of the interior of the housing 19 are engaged to the crimping sleeve 23. Finally, the crimping sleeve 23 to which the boot 27 is engaged is attached through the rear opening 41 of the hosing 19. Namely, both the provisional installation in which the boot 27 is installed to the crimping sleeve 23, and the final installation in which the crimping sleeve 23 and the housing 19 are installed to each other are performed in the same assembly direction extending along the axis of the optical fiber cable 15, so that the assembly can be easily conducted. In other words, the optical connector can easily cope with the assembly automation.

In the optical connector 13 of the embodiment, furthermore, the pair of T-shaped protrusions 99 are disposed on both sides of the flange portion 93 of the boot 27 across the optical fibers 35 which are passed through the flange portion 93. According to the configuration, a force in the slipping-off direction which acts on the boot 27 is evenly supported by the both sides of the flange portion 93 across the axis of the optical fiber cable 15, and the flange portion 93 of the boot 27 is stably engaged.

According to the optical connector 13 of the embodiment, therefore, slipping off of the boot caused by accidental pulling of the boot or loosening due to bending of the optical fiber cable can be prevented from occurring, without increasing the man hour for the work, and the material cost.

The optical connector of the invention is not limited to the above-described embodiment, and may be adequately subjected to modifications, improvements, and the like. In addition, the materials, shapes, dimensions, numbers, places, and the like of the components of the above-described embodiment are arbitrary and not limited insofar as the invention is achieved.

In the embodiment, for example, the crimping ring 25 having an oval tubular shape is used as the crimping member which fixes the sheath 33 of the optical fiber cable 15 that covers the outer circumference of the tubular portion 63 of the crimping sleeve 23. The invention is not limited to this. As shown in Fig. 6, a crimping plate 26 having a substantially oval tubular shape may be used. The crimping plate 26 which has been formed into a substantially oval tubular shape by bending a rectangular metal plate includes a slit 26a which extends along the axis of the optical fiber cable 15, and crimps and fixes the sheath 33 of the optical fiber cable 15 over the tubular portion 63.

The present application is based on Japanese Patent Application No. 2012-021103 filed on February 2, 2012.

## Claims

1. An optical connector (13) comprising:
a housing (19) which houses a ferrule (21) connected to a tip end portion of an optical fiber (35) of an optical fiber cable (15);
a crimping sleeve (23) housed in the housing (19) being inserted through the opening (41) of the housing (19) and including a tubular portion (63) in which the optical fiber (35) is passed through and which is led out from an opening (41) of the housing (19);
an engaging mechanism (79) configured to block slipping off of the crimping sleeve (23) from the interior of the housing (19),
a crimping member (25) which fixes a sheath (33) of the optical fiber cable (15), the sheath (33) covering an outer circumference of the tubular portion (63); and
a boot (27) including a protecting portion (87) which covers outer circumferences of the optical fiber cable (15) and the crimping member (25), the boot (27) including a flange portion (93) which is continuous to the protecting portion (87) and which covers the opening (41) of the housing (19),
wherein a neck portion (101) of a T-shaped protrusion (99), which is protruded from the flange portion (93) toward an interior of the housing (19), is inserted into a boot engagement notch (81), which is formed in an outer portion of the crimping sleeve (23) and an open end (85) of which is closed by an inner surface (73) of a sidewall of the housing (19).

2. The optical connector (13) according to claim 1, wherein a tip end of the neck portion (101) of the T-shaped protrusion (99) is a swollen portion (103), and the swollen portion (103) is larger than the neck portion (101) in a cross-sectional shape perpendicular to a direction in which the T-shaped protrusion (99) is protruded from the flange portion (93).

3. The optical connector (13) according to claim 1 or claim 2, wherein a pair of the boot engagement notch (81) and a pair of the T-shaped protrusion (99) are disposed across the tubular portion (63).

## Patentansprüche

1. Optischer Verbinder (13), der umfasst:
ein Gehäuse (19), das eine Ferrule (21) aufnimmt, die mit einem vorderen Endabschnitt eines Lichtwellenleiters (35) eines Lichtwellenleiterkabels (15) verbunden ist;
eine Quetschhülse (23), die in dem Gehäuse (19) aufgenommen ist, über die Öffnung (41) des Gehäuses (19) eingeführt ist und einen röhrenförmigen Abschnitt (63) enthält, durch den der Lichtwellenleiter (35) hindurchgeführt ist und der über eine Öffnung (41) des Gehäuses (19) herausgeführt ist;
einen Eingriffs-Mechanismus (79), der so eingerichtet ist, dass er Herausrutschen der Quetschhülse (23) aus dem Innenraum des Gehäuses (19) verhindert,
ein Quetschelement (25), das eine Ummantelung (33) des Lichtwellenleiters (15) fixiert, wobei die Ummantelung (33) einen Außenumfang des röhrenförmigen Abschnitts (63) abdeckt; sowie
eine Manschette (27), die einen schützenden Abschnitt (87) enthält, der den Außenumfang des Lichtwellenleiterkabels (15) und den des Quetschelementes (25) abdeckt, wobei die Manschette (27) einen Flansch-Abschnitt (93) enthält, der sich an den schützenden Abschnitt (87) anschließt und der die Öffnung (41) des Gehäuses (19) abdeckt,
wobei ein Hals-Abschnitt (101) eines T-förmigen Vorsprungs (99), der von dem Flansch-Abschnitt (93) auf einen Innenraum des Gehäuses (19) zu vorsteht, in eine Eingriffs-Einkerbung (81) der Manschette eingeführt ist, die in einem äußeren Abschnitt der Quetschhülse (23) ausgebildet ist und deren offenes Ende (85) durch eine Innenfläche (73) einer Seitenwand des Gehäuses (19) verschlossen wird.

2. Optischer Verbinder (13) nach Anspruch 1, wobei ein vorderes Ende des Hals-Abschnitts (101) des T-förmigen Vorsprungs (99) ein aufgeweiteter Abschnitt (103) ist und der aufgeweitete Abschnitt (103) in einer Querschnittsform senkrecht zu einer Richtung, in der der T-förmige Vorsprung (99) von dem Flansch-Abschnitt (93) vorsteht, größer ist als der Hals-Abschnitt (101).

3. Optischer Verbinder (13) nach Anspruch 1 oder Anspruch 2, wobei ein Paar von Eingriffs-Einkerbungen (81) der Manschette und ein Paar von T-förmigen Vorsprüngen (99) über den röhrenförmigen Abschnitt (63) angeordnet sind.

## Revendications

1. Connecteur optique (13) comprenant:
un boîtier (19) qui loge une virole (21) connectée à une extrémité d'extrémité d'une fibre optique (35) d'un câble à fibre optique (15);
un manchon de sertissage (23) logé dans le boîtier (19) étant inséré à travers l'ouverture (41) du boîtier (19) et comprenant une partie tubulaire (63) dans laquelle passe la fibre optique (35), avant de ressortir d'une ouverture (41) du boîtier (19);
un mécanisme de mise en prise (79) configuré pour empêcher le glissement du manchon de sertissage (23) à partir de l'intérieur du boîtier (19),
un élément de sertissage (25) qui fixe une gaine (33) du câble à fibre optique (15), la gaine (33) recouvrant une circonférence extérieure de la partie tubulaire (63); et
un soufflet (27) comprenant une partie protection (87) qui recouvre les circonférences extérieures du câble à fibre optique (15) et l'élément de sertissage (25), le soufflet (27) comprenant une partie bride (93) qui est continue jusqu'à la partie protection (87) et qui recouvre l'ouverture (41) du boîtier (19),
dans lequel une partie col (101) d'une protubérance en forme de T (99), qui fait saillie depuis la partie bride (93) vers un intérieur du logement (19), est insérée dans une encoche de mise en prise du soufflet (81), qui est formé dans une partie extérieure du manchon de sertissage (23) et dont une extrémité ouverte (85) est refermée par une surface intérieure (73) d'une paroi latérale du boîtier (19).

2. Connecteur optique (13) selon la revendication 1, dans lequel une extrémité de la partie col (101) de la protubérance en forme de T (99) est une partie gonflée (103) et la partie gonflée (103) est plus grande que la partie col (101) en coupe transversale perpendiculaire à une direction dans laquelle la protubérance en forme de T (99) fait saillie depuis la partie bride (93).

3. Connecteur optique (13) selon la revendication 1 ou la revendication 2, dans lequel une encoche de mise en prise du soufflet (81) et une paire de protubérances en forme de T (99) sont disposées en travers de la partie tubulaire (63).
